(19) Europäisches Patentamt
European Patent Office
Office européen des brevets

(11) Veröffentlichungsnummer: **0 071 861**
**B1**

(12) # EUROPÄISCHE PATENTSCHRIFT

(45) Veröffentlichungstag der Patentschrift: **18.09.85**

(21) Anmeldenummer: **82106728.7**

(22) Anmeldetag: **24.07.82**

(51) Int. Cl.⁴: **C 08 G 65/28**, B 01 F 17/00, C 09 B 67/46

(54) **Dispergiermittel, Verfahren zu deren Herstellung und deren Verwendung.**

(30) Priorität: **01.08.81 DE 3130609**

(43) Veröffentlichungstag der Anmeldung: **16.02.83 Patentblatt 83/07**

(45) Bekanntmachung des Hinweises auf die Patenterteilung: **18.09.85 Patentblatt 85/38**

(84) Benannte Vertragsstaaten: **BE CH DE FR GB IT LI NL SE**

(56) Entgegenhaltungen: **EP-A- 0 017 189**
***Die Akte enthält technische Angaben, die nach dem Eingang der Anmeldung eingereicht wurden und die nicht in dieser Patentschrift enthalten sind.***

(73) Patentinhaber: **HOECHST AKTIENGESELLSCHAFT**
**Postfach 80 03 20**
**D-6230 Frankfurt am Main 80 (DE)**

(72) Erfinder: **Diery, Helmut, Dr.**
**Theresenstrasse 45**
**D-6233 Kelkheim (Taunus) (DE)**
Erfinder: **Deubel, Reinhold, Dr.**
**Geierfeld 51**
**D-6232 Bad Soden am Taunus (DE)**
Erfinder: **Weide, Joachim**
**Im Stückes 63**
**D-6233 Kelkheim (Taunus) (DE)**

**EP 0 071 861 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

**Beschreibung**

Gegenstand der Erfindung sind Verbindungen der Formel 1

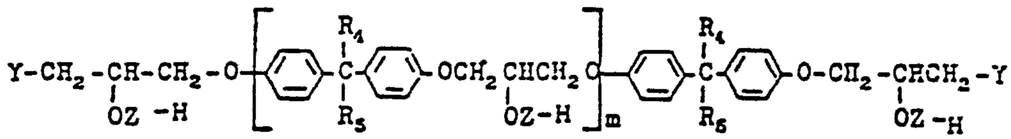
(1)

wobei Y eine Gruppe der Formeln

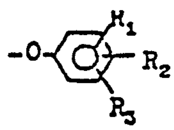
oder
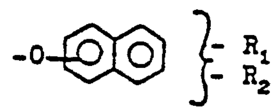

$R_1$, $R_2$, $R_3$ Wasserstoff, einen $C_1$-$C_{18}$-Alkylrest, Chlor oder Brom,

$R_4$ und $R_5$ Wasserstoff oder $C_1$-$C_4$-Alkyl, m 0 bis 12 und Polyalkylenglykolreste mit insgesamt etwa 8 bis zu etwa 200 Ethylenglykoleinheiten $-(CH_2-CH_2O)-$ oder bis zu etwa 200 Ethylenglykoleinheiten und Alkylenglykoleinheiten der Formel $-(\underset{R_6}{\underset{|}{C}}H-CH_2O)-$,

worin $R_6$ Methyl oder Ethyl ist und insgesamt mindestens 8 Ethylenglykoleinheiten enthalten sind, bedeuten.

Diese Verbindungen werden hergestellt nach an sich bekannten Verfahren, indem man zunächst eine Verbindung der Formel 2

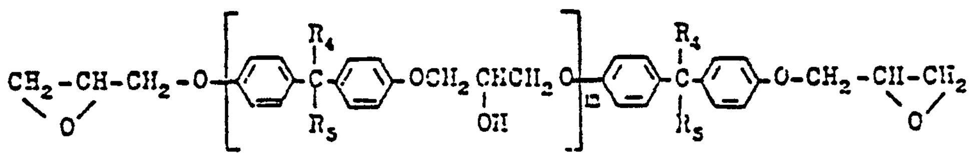
(2)

mit einem Phenol der Formeln 3 oder 4

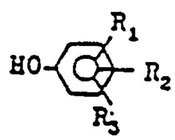
(3)
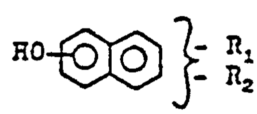
(4)

zur Verbindung der Formel 5

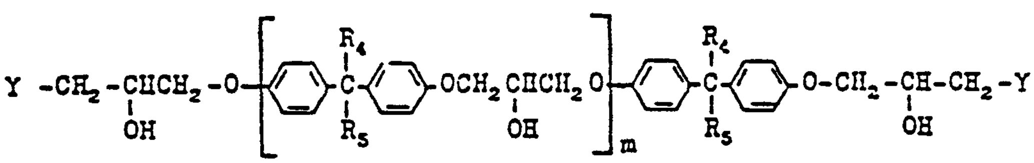
(5)

umsetzt, wobei Y eine Gruppe der Formeln

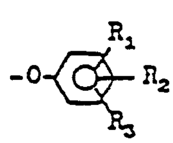
oder
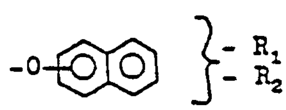

bedeutet, und diese Verbindung dann oxalkyliert.

Als Ausgangsverbindungen der Formel 2 eignen sich die bekannten Epoxidharze soweit sie endständige Glycidyläthergruppen enthalten, die durch Umsetzung von p,p'-Dihydroxydiphenylmethan,

p,p'-Dihydroxydiphenylpropan, p,p'-Dihydroxydiphenylbutan mit Epichlorhydrin nach bekannten Methoden hergestellt werden. Es kommen auch höhere Epoxidharze in Frage, wie sie beispielsweise durch Umsetzung eines der oben erwähnten Bisphenole mit unterstöchiometrischen Mengen an Epichlorhydrin erhalten werden.

Diese Epoxide werden mit den phenolischen Verbindungen der Formeln 3 und 4 bei Temperaturen von ca. 100-160 °C umgesetzt. Die Reaktion kann aber auch in einem inerten organischen Lösungsmittel erfolgen.

Als phenolische Verbindungen gemäß der Formeln 3 und 4 eignen sich z. B. Phenol, p-Kresol, o-Kresol, 2,4-Xylenol, 2,4,6-Trimethylphenol, p-isopropyl-phenol, p-tert.butyl-phenol, 2,4-Di-sek.Butylphenol, 2,4,6-Tri-sek.butylphenol, p-iso-Octylphenol, p-iso-Nonylphenol, o-iso-Nonylphenol, Di-iso-Nonylphenol, p-iso-Dodecylphenol, p-n-Dodecylphenol, p-n-Oktadecylphenol, o-Chlorphenol, p-Chlorphenol, o,o'-Dichlorphenol, 2,4,6-Trichlorphenol, o-Bromphenol, o,o'-Dibromphenol, α-Naphthol, β-Naphthol, 1-Methyl-2-hydroxy-naphthalin, 1-iso-Octyl-2-hydroxynaphthalin, 1-n-Dodecyl-2-hydroxynaphthalin, 1-Chlor-2-hydroxy-naphthalin.

Durch diese Reaktion erhält man zunächst das Produkt der Formel 5, das dann nach bekannten Methoden mit Kaliumhydroxid oder bevorzugt mit Natriumhydroxid oder Natriummethylat als Katalysator bei Temperaturen von ca. 150° bis 200 °C oxalkyliert wird. Die Menge an Ethylenoxid soll pro Mol des Produktes der Formel 5 wenigstens 8 Mol betragen ; sie wird so bemessen, daß in Wasser lösliche Verbindungen anfallen. Die hierfür erforderliche Menge an Ethylenoxid richtet sich vor allem nach der Hydrophobie der Verbindungen der Formel 5 und der Menge des die Hydrophobie verstärkenden, ggf. mitverwendeten Propylen- und Butylenoxids.

Die Oxalkylierung kann mit Ethylenoxid zu Produkten allein mit Polyethylenoxid-Ketten durchgeführt werden, man kann aber auch zunächst mit Propylenoxid oder Butylenoxid eine Polypropylen- oder Polybutylenglykolkette und anschließend bis zur Erzielung der Wasserlöslichkeit mit Ethylenoxid einen Polyethylenoxidrest einführen. Außer der Blockpolymerisation, bei der zunächst Propylenoxid oder Butylenoxid und dann Ethylenoxid oder umgekehrt eingeführt werden, lassen sich die erfindungsgemäßen Verbindungen aber auch in einer Mischoxalkylierung durch Oxalkylierung mit einer Mischung aus Ethylenoxid/Propylenoxid und/oder Butylenoxid herstellen. In allen Fällen muß der Anteil des eingeführten Ethylenoxids so hoch sein, daß in Wasser lösliche Produkte erhalten werden. Die Oxalkylierung kann drucklos oder in Druckgefäßen durchgeführt werden, wobei Alkylenoxid gasförmig oder flüssig zugeführt werden kann. Der bevorzugte Arbeitsdruck beträgt 2-8 bar.

Die so erhaltenen Verbindungen der Formel 1 eignen sich hervorragend als Dispergiermittel für die Herstellung von Dispersionen von Pigmenten, Farbstoffen und optischen Aufhellern, sowie für die Formulierung von Pflanzenschutz- und Schädlingsbekämpfungsmitteln.

Diese Verbindungen können dabei allein oder in Kombination mit anderen tensidischen Verbindungen, anderen Zusatz- und Hilfsstoffen in den Formulierungen angewandt werden. Die wasserfreien erfindungsgemäßen Dispergiermittel sind in jedem Verhältnis mit Wasser bzw. Wasser/Alkohol-Gemischen verdünnbar und eignen sich dadurch besonders gut zur Herstellung von hochkonzentrierten, fließfähigen Dispersionen organischer und anorganischer Pigmente.

Die Herstellung solcher Pigmentdispersionen erfolgt in bekannter Weise, indem man die Pigmente, wie z. B. Azopigmente, verlackte Azopigmente, Triphenylmethanpigmente, Thioindigopigmente, Perylentetracarbonsäurepigmente, Dioxazinpigmente, Chinacridonpigmente, Phthalocyaninpigmente oder anorganische Pigmente mit den erfindungsgemäßen Verbindungen unter Zusatz von Äthylenglykol, Wasser und gegebenenfalls geringen Mengen anderer Dispergiermittel in einer geeigneten Dispergiervorrichtung, wie zum Beispiel eine Rührwerksmühle oder einen Doppelmuldenkneter, dispergiert. Zur Herstellung im Kneter verfährt man in der Weise, daß man die erfindungsgemäßen Dispergiermittel und wenig Wasser im Kneter vorlegt, die Pigmente portionsweise einträgt, gegebenenfalls unter Zusatz von geringen Mengen anderer Dispergiermittel und bei zäher Konsistenz knetet. Nach erfolgter Feinverteilung wird unter Zugabe von z. B. Äthylenglykol und Wasser auf die gewünschte Farbstärke und Konsistenz verdünnt. Beim Einsatz einer Rührwerksmühle werden die Pigmente in einem Gemisch aus den oben beschriebenen Verteilungsmitteln, Ethylenglykol und Wasser, eventuell geringer Mengen anderer Verteilungsmittel, durch Verrühren zu einem Teig homogenisiert. Diese pumpfähige Suspension wird dann im allgemeinen in einer kontinuierlichen Rührwerksmühle mit Quarzitperlen von ca. 1 mm Ø in eventuell mehreren Durchgängen bis zur gewünschten Feinheit gemahlen. Anschließend kann mit Wasser oder z. B. Ethylenglykol als Wasserrückhaltemittel auf die gewünschte Farbstärke eingestellt werden. Das Verhältnis von Dispergiermittel zu Pigmentpulver kann in weiten Grenzen variieren und beträgt im allgemeinen 0,1 bis 0,3 Gewichtsteile Dispergiermittel auf ein Gewichtsteil trockenes Pigmentpulver.

Die so erhaltenen Pigmentdispersionen eignen sich zum Einfärben von Dispersionsfarben für Innen- und Außenanstriche, für den Einsatz im textilen Pigmentdruck oder für den Einsatz in wäßrigen Flexo- bzw. Tiefdruckfarben, besonders in Verbindung mit Alkoholzusätzen. Die hervorragenden Netz- und Dispergiereigenschaften der beschriebenen Dispergiermittel machen sich besonders durch niedrige Einsatzmengen, bezogen auf die Pigmentgehalte in den Dispersionen bemerkbar. Helle und brillante Farbtöne werden beim Flexo- und Tiefdruck durch die geringe Eingenfärbung der beanspruchten Dispergiermittel nicht beeinträchtigt.

## Beispiele

Herstellung der Verbindungen Beispiele 1 bis 11 « ti- » bedeutet in allen Fällen « Innentemperatur »

### Beispiel 1

In einem 4-Hals-Schliffkolben mit Rückflußkühler, Innenthermometer, Rührung und einem auf 50° beheizten Tropftrichter werden 216 g p-Kresol (2 Mol) und 2 g pulv. Ätznatron vorgelegt. Bei ti = 140 bis 145 °C werden innerhalb von ca. 3/4 Stunden 369 g eines im Handel erhältlichen Diglycidylethers von 2,2-Bis-[p-hydroxyphenyl-]-propan (Epoxidzahl 198, Gebr. Mol : 369) zugetropft. Die Reaktion ist exotherm. Das Heizbad wird zeitweise entfernt. Anschließend wird das Reaktionsgemisch 1 1/2 Stunden bei ti = 140 °C nachgerührt. Das Reaktionsprodukt ist eine dunkelrot-braune, harzartige Masse mit einer Epoxidzahl von 1 und einem Gehalt an p-Kresol von 0,4 %.

244,5 g des erhaltenen Additionsproduktes werden unter Druck in Gegenwart von 2 g pulv. Ätznatron mit 805 g Ethylenoxid bei 160-170 °C im Verlauf von 2 1/2 Stunden bei 4-5 bar oxethyliert. Das pastenförmige Endprodukt zeigt einen Trübungspunkt von 98 °C (in Wasser DIN 53917) und enthält 76,7 % Ethylenoxid.

### Beispiel 2

440 g Nonylphenol (2 Mol) und 2 g pulv. Ätznatron werden wie in Beispiel 1 mit 369 g des Diglycidylethers von 2,2-Bis-[p-hydroxy-phenyl]-propan umgesetzt. Zeit : 1/2 Stunde ; ti = 140-145 °C ; 1/2 h bei 140 °C nachgerührt. Das Reaktionsprodukt ist eine dunkelrotbraune, harzartige Masse mit einer Epoxidzahl von 2 und einem Gehalt an Nonylphenol von 1,1 %.

266 g des erhaltenen Additionsproduktes werden unter Druck in Gegenwart von 1 g pulv. Ätznatron mit 1 068 g Ethylenoxid bei 160-180 °C im Verlaufe von 2 Stunden bei 3-4 bar oxethyliert. Das wachsartige Endprodukt zeigt einen Trübungspunkt von 95 °C (in Butyldiglykol nach DIN 53 917) und enthält 80,1 % Ethylenoxid.

### Beispiel 3

5 102 g 2,4,6-Tri-sek.Butylphenol (20 Mol) (Molmasse 255,1) und 20 g pulv. Ätznatron werden wie in Beispiel 1 mit 3 740 g des Diglycidylethers von 2,2-Bis-[p-hydroxyphenyl]-propan (Epoxidzahl 195, Gebr. Mol : 374) umgesetzt. Zeit : 1 h ; ti = 160 °C. Das Heizbad wird mit Beginn der Zugabe entfernt. 5 h bei 160° nachgerührt. Das Reaktionsprodukt ist rotbraun und harzartig. Die Epoxidzahl liegt bei 1 und der Gehalt an nicht umgesetztem 2,4,6-Tri-sek.Butylphenol bei 4,3 %.

a) 302 g des Additionsproduktes werden in Gegenwart von 5,0 g Na-methylatlösung (30 %ig in Methanol) mit 924 g Ethylenoxid bei 160-170 °C bei 4-5 bar oxethyliert. Das Endprodukt ist wachsartig und enthält 75,3 % Ethylenoxid. Trübungspunkt 91 °C (in Butyldiglykol nach DIN 53917).

b) 88 g des Additionsproduktes werden in Gegenwart von 1,5 g Na-methylat-lösung (30 %ig in Methanol) mit 790 g Ethylenoxid wie oben oxethyliert. Das Endprodukt ist wachsartig und enthält 90,0 % Ethylenoxid. Trübungspunkt 98 °C (in Butyldiglykol nach DIN 53917).

### Beispiel 4

376 g Phenol (4 Mol) und 4 g pulv. Ätznatron werden wie in Beispiel 1 mit 748 g eines Diglycidylethers von 2,2-Bis-[p-hydroxy-phenyl]-propan (Epoxidzahl 195, Gebr. Mol : 374) umgesetzt. Zeit : 3/4 h ; ti = 140-145 °C ; 3 1/2 h bei 140° nachgerührt. Das Reaktionsprodukt ist rotbraun und harzartig fest. Die Epoxidzahl liegt bei 2 und der Gehalt an Phenol bei 0,6 %.

290 g des Additionsproduktes werden unter Druck in Gegenwart von 1 g pulv. Ätznatron mit 1 166 g Ethylenoxid bei 160-170 °C und 4-5 bar im Verlauf von 1 1/2 h oxethyliert. Das Endprodukt ist wachsartig und enthält 80,0 % Ethylenoxid. Der Trübungspunkt liegt bei 94 °C (in Butyldiglykol nach DIN 53917).

### Beispiel 5

315,8 p-tert.Butylphenol, 95 % (= 2 Mol 100 %ig) und 2 g pulv. Ätznatron werden wie in Beispiel 1 mit 376 g eines Diglycidylethers von 2,2-Bis-[p-hydroxy-phenyl]-propan (Epoxidzahl 194 ; Gebr. Mol : 376) umgesetzt. Zeit : 1/2 h ; ti = 140-145 °C ; 2 1/2 h bei 140 °C nachgerührt. Das Reaktionsprodukt ist rotbraun und harzartig fest. Die Epoxidzahl liegt bei 2 und der Gehalt an p-tert. Butylphenol bei 1,5 %.

145 g des Additionsproduktes werden unter Druck in Gegenwart von 2,4 g Na-methylatlösung (30 %ig in Methanol) mit 582 g Ethylenoxid bei 160-170 °C und 4-5 bar im Verlauf von 1 h oxethyliert. Das Endprodukt ist wachsartig und enthält 79,9 % Ethylenoxid. Der Trübungspunkt liegt bei 92 °C (in Butyldiglykol nach DIN 53917).

### Beispiel 6

288 g β-Naphthol (2 Mol) und 2 g pulv. Ätznatron werden wie in Beispiel 1 mit 376 g des

Diglycidylethers von 2,2-Bis-[p-hydroxyphenyl]-propan (Epoxidzahl 194 ; Gebr. Mol 376) umgesetzt. Zeit : 1/2 h ; ti = 140-145 °C ; 2 1/2 h bei 140 °C nachgerührt. Das Reaktionsprodukt ist rotbraun und harzartig fest. Die Epoxidazhl liegt bei 2 und der Gehalt an β-Naphthol bei 1,8 %.

294 g des Additionsproduktes werden unter Druck in Gegenwart von 4,9 g Na-methylatlösung (30 %ig in Methanol) mit 879,5 g Ethylenoxid bei 160-170 °C und 4-5 bar im Verlauf von 1 1/2 h oxethyliert. Das Endprodukt ist wachsartig und enthält 74,9 % Ethylenoxid. Der Trübungspunkt liegt bei 90 °C (in Butyldiglykol nach DIN 53917).

Beispiel 7

257 g 4-Chlorphenol (2 Mol) und 2 g pulv. Ätznatron werden wie in Beispiel 1 mit 372 g eines Diglycidylethers von 2,2-Bis-[p-hydroxyphenyl-]-propan (Epoxidzahl 196 ; Gebr. Mol : 372) umgesetzt. Zeit : 1/2 h ; ti = 140-145 °C ; 2 1/2 h bei 140 °C nachgerührt. Das Reaktionsprodukt ist schwarzbraun und harzartig fest. Der Gehalt an p-Chlorphenol beträgt 0,1 %.

220 g des Additionsproduktes werden unter Druck in Gegenwart von 3,4 g Na-methylatlösung (30 %ig in Methanol) mit 686 g Ethylenoxid bei 160-170 °C und 4-5 bar im Verlauf von 1 h oxethyliert. Das Endprodukt ist wachsartig und enthält 75,6 % Ethylenoxid. Der Trübungspunkt liegt bei 90 °C (in Butyldiglykol nach DIN 53917) bzw. 96 °C (in $H_2O$ nach DIN 53917).

Beispiel 8

244 g 2,4-Xylenol (2 Mol) und 2 g pulv. Ätznatron werden wie in Beispiel 1 mit 376 g eines Diglycidylethers von 2,2-Bis-[p-hydroxyphenyl]-propan (Epoxidzahl 194 ; Gebr. Mol = 376) umgesetzt. Zeit : 1/2 h ; ti = 140-145 °C ; 2 1/2 h bei 140 °C nachgerührt. Der Gehalt an 2,4-Xylenol beträgt 0,2 %. Das Reaktionsprodukt ist schwarzbraun und harzartig fest.

173 g des Additionsproduktes werden unter Druck in Gegenwart von 2,9 g Na-methylatlösung (30 %ig in Methanol) mit 731 g Ethylenoxid bei 160-170 °C und 4-5 bar im Verlauf von 1 h oxethyliert. Das Endprodukt ist wachsartig und enthält 80,8 % Ethylenoxid. Der Trübungspunkt liegt bei 93,5 °C (in Butyldiglykol nach DIN 53917).

Beispiel 9

182,5 g des Additionsproduktes aus Beispiel 3 (Tri-sek. butylphenol und Diglycidylether von 2,2-Bis-[p-hydroxyphenyl]-propan) werden unter Druck in Gegenwart von 3,0 g Na-methylatlösung (30 %ig in Methanol) mit 115,4 g Propylenoxid bei 160-170 °C und 4-5 bar im Verlauf von 20 Minuten oxpropyliert. Anschließend wird das Produkt mit 362,5 g Ethylenoxid bei 160-170 °C und 4-5 bar im Verlauf von 30 Minuten oxethyliert. Das Endprodukt ist wachsartig und enthält 55,8 % Ethylenoxid und 17,0 % Propylenoxid. Der Trübungspunkt liegt bei 84,5 °C (in Butyldiglykol nach DIN 53917).

Beispiel 10

176,8 g des Additionsproduktes aus Beispiel 3 werden unter Druck in Gegenwart von 3,0 g Na-methylatlösung (30 %ig in Methanol) mit einer Mischung von 112 g Propylenoxid und 413 g Ethylenoxid bei 160-170 °C und 4-5 bar im Verlauf von 50 Minuten mischoxalkyliert. Das Endprodukt ist flüssig und enthält 58,7 % Ethylenoxid sowie 15,9 % Propylenoxid. Der Trübungspunkt liegt bei 72,5 °C (in Butyldiglykol nach DIN 53917).

Beispiel 11

255 g 2,4,6-Tri-sek.Butylphenol und 2 g pulv. Ätznatron werden wie in Beispiel 1 auf 160 °C erhitzt und in 1·h 468 g (0,5 Mol) einer Verbindung der folgenden Formel

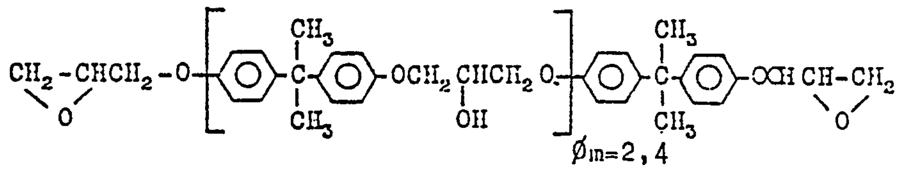

Øm=2,4

(Epoxidzahl = 77/78)

portionsweise zugesetzt. Die Reaktion ist nicht exotherm. Es wird 4 h bei 160 °C nachgerührt. Die rotbraune, homogene Schmelze erstarrt bei Raumtemperatur und hat eine Epoxidzahl von 1.

150 g des Additionsproduktes werden unter Druck in Gegenwart von 2,5 g Na-methylatlösung (30 %ig in Methanol) mit 474 g Ethylenoxid bei 160-170 °C und 4-5 bar im Verlauf von 1 h oxethyliert. Das Endprodukt ist wachsartig und enthält 75,8 % Ethylenoxid. Der Trübungspunkt liegt bei 94 °C (in Butyldiglykol nach DIN 53917).

## Anwendungsbeispiele

### Anwendungsbeispiel 1

48 Gew.-Teile Pigment Red 112 (Colour Index No. 12370) werden mit 9 Gew.-Teilen der Verbindung aus Beispiel 1, 10 Gew.-Teilen Äthylenglykol und 5 Gew.-Teilen Wasser in einem Doppelmuldenkneter 1 h dispergiert. Anschließend wird die Knetmasse durch Zugabe von 28 Gew.-Teilen Wasser zu einer lagerstabilen, dünnflüssigen Pigmentpräparation verdünnt, die sich hervorragend zum Anfärben wäßriger Flexo- bzw. Tiefdruckfarben und zum Pigmentieren wäßriger Anstrichfarben auf Basis von Kunststoffdispersionen eignet.

### Anwendungsbeispiel 2

Setzt man im Anwendungsbeispiel 1 anstelle der Verbindung aus Beispiel 1 8,5 Gew.-Teile der Verbindung aus Beispiel 2 ein, so erhält man eine Pigmentpräparation mit entsprechend guten anwendungstechnischen Eigenschaften.

### Anwendungsbeispiel 3

45 Gew.-Teile Pigment Blue 15 : 3 (Colour Index No. 74160) werden mit 6 Gew.-Teilen der Verbindung aus Beispiel 9, 10 Gew.-Teilen Äthylenglykol und 26 Gew.-Teilen Wasser in einer Rührwerkskugelmühle mit 1 mm Siliquarzit-Perlen gemahlen und anschließend durch Zugabe von 13 Gew.-Teilen Wasser verdünnt. Die auf diese Weise erhaltene sehr gut fließfähige Pigmentdispersion läßt sich in jedem Verhältnis mit Wasser weiterverdünnen und eignet sich besonders zum Anfärben wasserhaltiger Bindemittelsysteme.

### Anwendungsbeispiel 4

Eine entsprechend gute Pigmentdispersion erhält man, wenn man die Verbindung aus Beispiel 9 in Anwendungsbeispiel 3 durch 6 Gew.-Teile der Verbindung aus Beispiel 10 ersetzt.

### Anwendungsbeispiel 5

42 Gew.-Teile eines Pigmentrusses mit einer spez. Oberfläche nach BET von 85 $m^2/g$ werden in eine Lösung aus 5 Gew.-Teilen der Verbindung aus Beispiel 3b, 10 Gew.-Teilen Äthylenglykol und 35 Gew.-Teilen Wasser eingerührt. Diese Suspension wird in einer Rührwerkskugelmühle mit 1 mm-Siliquarzit-Perlen gemahlen und anschließend durch Zugabe von 8 Gew.-Teilen Wasser verdünnt. Die auf diese Weise erhaltene, lagerstabile Pigmentdispersion eignet sich hervorragend für den Einsatz in wäßrigen Flexodruckfarben.

### Anwendungsbeispiel 6

45 Gew.-Teile eines durch Mischkupplung von diazotiertem 3,3'-Dichlorbenzidin auf Acetessig-anilid und Acetessig-p-anisidid im Verhältnis 9 : 1 erhaltenen Pigments werden mit 7 Gew.-Teilen der Verbindung aus Beispiel 6 und 13 Gew.-Teilen Wasser in einem Doppelmuldenkneter 45 Minuten dispergiert. Durch Zugabe von 10 Gew.-Teilen Äthylenglykol und 25 Gew.-Teilen Wasser wird eine dünnflüssige Pigmentpräparation erhalten, die sich hervorragend zum Anfärben wäßriger Flexo- und Tiefdruckfarben eignet.

Pigmentdispersionen mit vergleichbar guten Eigenschaften werden erhalten, wenn die 7 Gew.-Teile der Verbindung aus Beispiel 6 durch 7 Gew.-Teile der Verbindung aus Beispiel 11 ersetzt werden.

### Anwendungsbeispiel 7

Setzt man im Anwendungsbeispiel 6 anstelle der Verbindung aus Beispiel 6 7 Gew.-Teile der Verbindung aus Beispiel 5 ein, so erhält man eine Pigmentdispersion mit vergleichbar guten Eigenschaften.

### Anwendungsbeispiel 8

40 Gew.-Teile Pigment 74 (Colour Index No. 11741) werden in eine Lösung aus 5 Gew.-Teilen der Verbindung aus Beispiel 8, 10 Gew.-Teilen Äthylenglykol und 29 Gew.-Teilen Wasser eingerührt. Diese Suspension wird in einer Rührwerksmühle mit 1 mm Siliquarzit-Perlen gemahlen und anschließend durch Zugabe von 16 Gew.-Teilen Wasser verdünnt. Die auf diese Weise erhaltene dünnflüssige Pigmentdispersion ist lagerstabil und eignet sich hervorragend zum Anfärben wäßriger Flexo- und Tiefdruckfarben und zum Pigmentieren wäßriger Anstrichfarben auf Basis von Kunststoffdispersionen.

Pigmentdispersionen mit vergleichbar guten Eigenschaften werden erhalten, wenn die 5 Gew.-Teile der Verbindung aus Beispiel 8 durch 5 Gew.-Teile der Verbindung aus Beispiel 7 ersetzt werden.

Anwendungsbeispiel 9

Entsprechend Anwendungsbeispiel 8 wird eine Pigmentdispersion aus 45 Gew.-Teilen Pigment Yellow 98 (Colour Index No. 11727), 6 Gew.-Teilen der Verbindung aus Beispiel 3a, 10 Gew.-Teilen Äthylenglykol und 39 Gew.-Teilen Wasser hergestellt. Die Eigenschaften dieser Pigmentdispersion sind mit denen der Dispersion des Anwendungsbeispiels 8 vergleichbar.

Anwendungsbeispiel 10

45 Gew.-Teile Pigment Red 184 werden mit 5 Gew.-Teilen der Verbindung aus Beispiel 4, 1 Gew.-Teil des Natriumsalzes eines Kondensationsproduktes aus Di-methyl-naphthalinsulfosäure und Formaldehyd und 20 Gew.-Teilen Wasser in einem Doppelmuldenkneter 1 h zäh geknetet. Nach erfolgter Dispergierung wird durch Zugabe von 10 Gew.-% Teilen Ethylenglykol und 19 Gew.-Teilen Wasser zu einer lagerstabilen Dispersion mit sehr guten rheologischen Eigenschaften verdünnt, welche sich besonders zum Anfärben wäßriger Flexo- und Tiefdruckfarben eignet.

**Patentansprüche**

1. Verbindungen der Formel 1

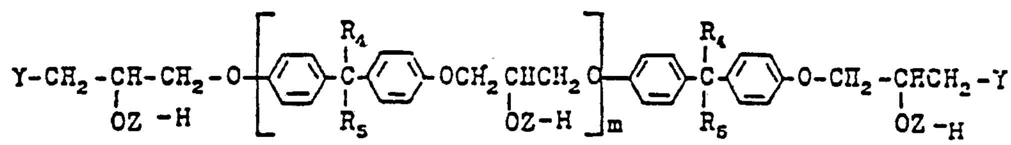 (1)

wobei Y eine Gruppe der Formeln

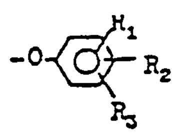 oder 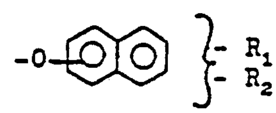

$R_1$, $R_2$, $R_3$ Wasserstoff, einen $C_1$-$C_{18}$-Alkylrest, Chlor oder Brom,
$R_4$ und $R_5$ Wasserstoff oder $C_1$-$C_4$-Alkyl,
m 0 bis 12 und
Z Polyalkylenglykolreste mit insgesamt etwa 8 bis etwa 200 Ethylenglykoleinheiten-$(CH_2$-$CH_2O)$- oder bis zu etwa 200 Ethylenglykoleinheiten und Alkylenglykoleinheiten der Formel $-(\underset{R_6}{CH}-CH_2O)$,

worin $R_6$ Methyl oder Ethyl ist und insgesamt mindestens 8 Ethylenglykoleinheiten enthalten sind, bedeuten.

2. Verfahren zur Herstellung der Verbindungen nach Anspruch 1, dadurch gekennzeichnet, daß man zunächst eine Verbindung der Formel 2

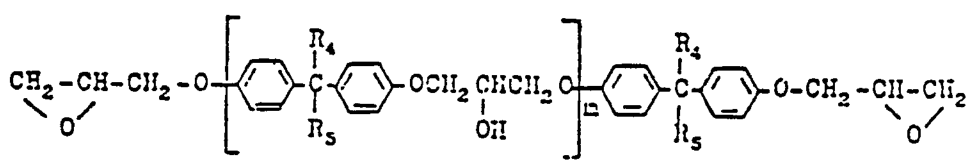 (2)

mit einer Verbindung der Formeln 3 oder 4

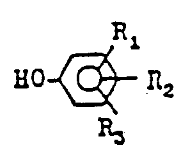 (3) 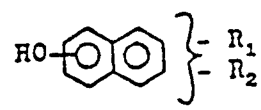 (4)

zu einer Verbindung der Formel 5

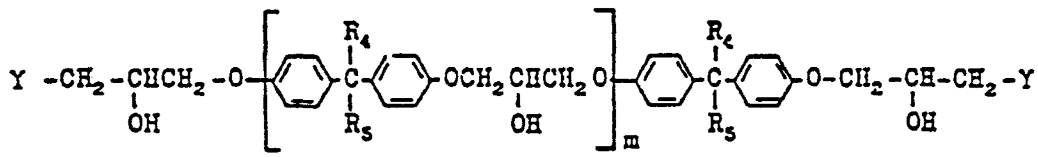

(5)

umsetzt, wobei Y eine Gruppe der Formel

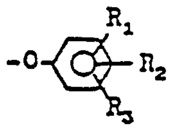

oder

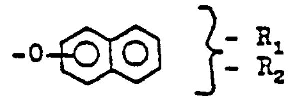

bedeutet und $R_1$, $R_2$, $R_3$, $R_4$ und $R_5$ die im Anspruch 1 genannten Bedeutungen besitzen, und diese Verbindung dann oxalkyliert.

3. Verwendung der Verbindungen gemäß Anspruch 1 als Dispergiermittel.

4. Verwendung der Verbindungen gemäß Anspruch 1 als Dispergiermittel zur Herstellung von wäßrigen Pigmentdispersionen.

**Claims**

1. A compound of the formula 1

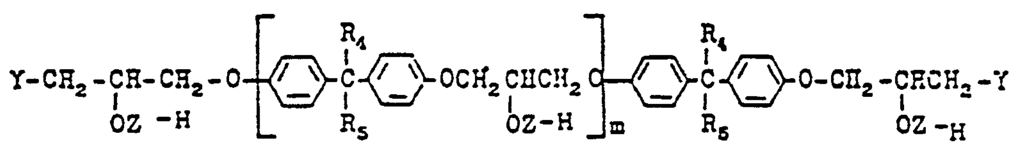

(1)

in which Y denotes a group of the formulae

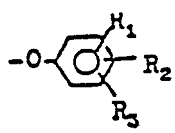

or

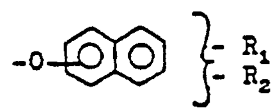

$R_1$, $R_2$, $R_3$ denote hydrogen, a $C_1$-$C_{18}$-alkyl radical, chlorine or bromine,
$R_4$ and $R_5$ denote hydrogen or $C_1$-$C_4$-alkyl,
m denotes 0 to 12 and
Z denotes polyalkylene glycol radicals having a total of about 8 to about 200 ethylene glycol units $-(CH_2-CH_2O)-$ or up to about 200 ethylene glycol units and alkylene glycol units of the formula

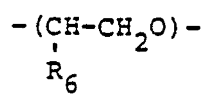

in which $R_6$ is methyl or ethyl and in which a total of at least 8 ethylene glycol units are present.

2. A process for the preparation of the compound as claimed in claim 1, which comprises initially reacting a compound of the formula 2

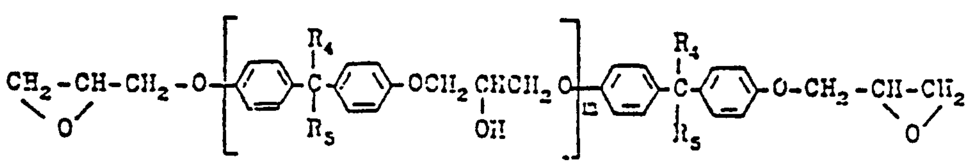

(2)

with a compound of the formula 3 or 4

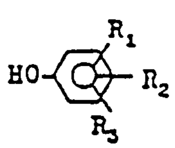

(3)

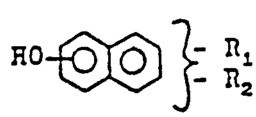

(4)

to give a compound of the formula 5

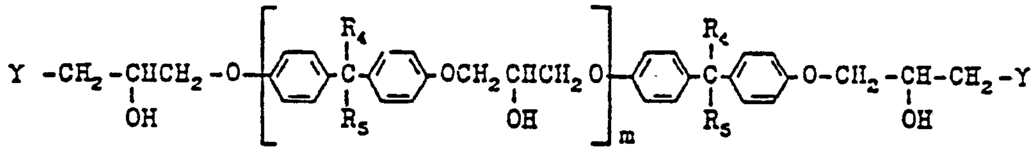
(5)

Y denoting a group of the formula

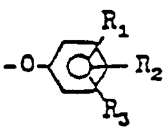
or
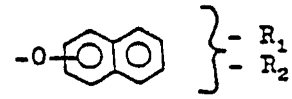

and $R_1$, $R_2$, $R_3$, $R_4$ and $R_5$ have the meanings indicated in claim 1, and this compound then being oxalkylated.

3. The use of the compound as claimed in claim 1 as a dispersant.

4. The use of the compound as claimed in claim 1 as a dispersant for the preparation of aqueous pigment dispersions.

## Revendications

1. Composés répondant à la formule 1 :

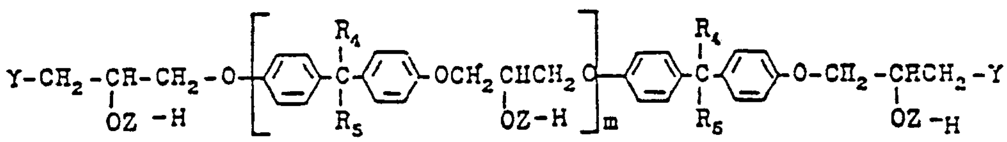
(1)

dans laquelle

Y représente un radical répondant à la formule :

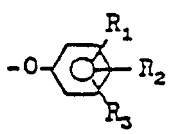
ou à la formule
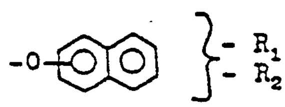

$R_1$, $R_2$, $R_3$ représentent chacun l'hydrogène, un radical alkyle contenant de 1 à 18 atomes de carbone, le chlore ou le brome,

$R_4$ et $R_5$ représentent chacun l'hydrogène ou un radical alkyle contenant de 1 à 4 atomes de carbone,

m représente un nombre de 0 à 12 et

les Z représentent des radicaux poly-alkylène-oxy contenant au total d'environ 8 jusqu'à environ 200 motifs éthylène-oxy —$(CH_2$-$CH_2O)$— ou jusqu'à environ 200 motifs pris dans l'ensemble constitué par les motifs éthylène-oxy et les motifs alkylène-oxy de formule

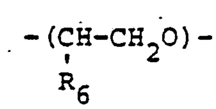

dans lesquels $R_6$ représente un radical méthyle ou éthyle, le nombre total des motifs éthylène-oxy étant au moins égal à 8.

2. Procédé de préparation des composés selon la revendication 1, procédé caractérisé en ce qu'on fait d'abord réagir un composé de formule 2 :

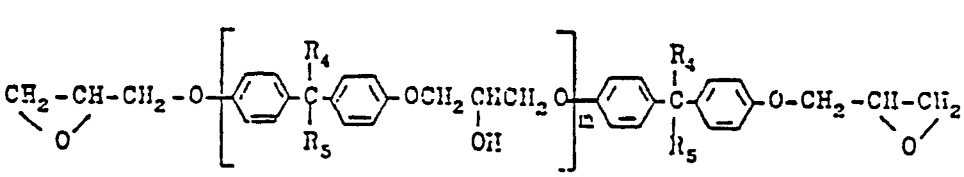
(2)

avec un composé répondant à l'une des formules 3 et 4 :

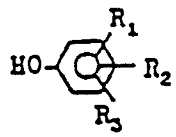 (3) 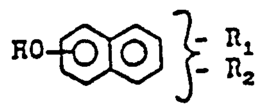 (4)

de manière à obtenir un composé répondant à la formule 5 :

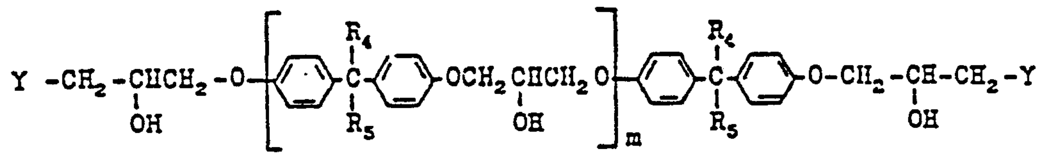 (5)

dans laquelle Y représente un radical répondant à l'une des formules :

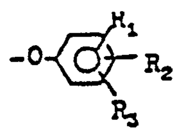 et 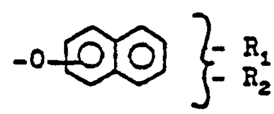

(dans les formules précédentes, $R_1$, $R_2$, $R_3$, $R_4$ et $R_5$ ont les significations qui ont été données à la revendication 1), puis on alcoxyle ce composé.

3. Application des composés selon la revendication 1 comme dispersants.

4. Application des composés selon la revendication 1 comme dispersants pour la préparation de dispersions aqueuses de pigments.